# EUROPEAN PATENT APPLICATION

(11) **EP 1 050 829 A2**
(43) Date of publication of application: **08.11.2000**
(21) Application number: 00107338.6
(22) Date of filing: 04.04.2000
(51) Int. Cl.: G06F 17/30

(54) **Visualization of graph-structured name spaces**

(30) Priority: 22.04.1999 EP 99107925
(71) Applicant: International Business Machines Corporation, Armonk, NY 10504 (US)
(72) Inventor: Breit, Edmund, 71034 Böblingen (DE); Holzheu, Michael, 75395 Ostelsheim (DE)
(74) Representative: Teufel, Fritz, Dipl.-Phys.

(57) **Abstract**

The basic idea comprised of the present invention is to represent the graph structure with the help of links, e.g., HTML links by aid of which the user can navigate through the output of the name space and to avoid a repeated work, e.g., display, output, etc., of the same object of a directed graph having meshes during scanning the graph by generating such a link to the location in which the object was output before instead of outputting it repeatedly. This is achieved by generating and maintaining a reference list during scanning the graph in which each object is identified uniquely and some information is stored for each object whether the object was already processed or not. In case it was already processed just a HTML-link to said prior output is generated. Otherwise the object is processed, e.g., is output and the list is updated correspondingly. By using such an HTML-link an output structure can be realized which enables the user to quickly understand the particular structure of the graph and to realize easily when there are different paths leading to one and the same object.

## Description

### 1. BACKGROUND OF THE INVENTION

### 1.1 FIELD OF THE INVENTION

The invention relates generally to so-called 'middleware', i.e., software being interposed functionally between operating system software and end-user, i.e., application software of computer systems. It deals particularly with the management of objects being distributed dispersed across a network of server systems and forming a linked name space.

### 1.2 DESCRIPTION AND DISADVANTAGES OF PRIOR ART

The usage of name spaces is found very often in daily life, and in particular they are found in computer systems. To make the resources of computer systems available to the user they are assigned human readable and human understandable names. resources then can be addressed by means of their names. The name-object tuples are administered in name spaces. Further, such a name serves for handling the object and to access it in the computer system. Such name spaces can be organized in a tree like form, as it is, for example the hierarchical structure of a computer file system, or are as a well-known example the name space constituted by the storage space provided by a the totality of file servers (FTP server) being accessible by the Internet. Always a plurality of objects is distributed in a certain structure.

When the contents of such name spaces should be output to any output device, e.g., for presenting it to a human user, some algorithm is required for scanning the structure and finding actually every object contained in it. The most common algorithm are such which scan the structure contents recursively either along the depth or the width of the structure. An object found during scan can always contain further objects, as it is the case with computer system file system structure, where a plurality of directory levels can be established, and in every unless the lowest level directory can be found a number of directories, and some contents of the directories, namely a certain number of files.

A number of tools, used for example by system administrators exist which can be used to output the contents of such name spaces or of those having an even more general structure. Such an output task is required to be done completely without forgetting anyone of the plurality of objects being part of the name space. A quiet convenient example for such a tool is the 'Windows Explorer' commonly used in PC systems which visualizes an hierarchical tree-like name space with a so-called tree-view. Here, a tree structure output is generated which reveals the hierarchical structure of the underlying name space, beginning with some root directory and continuing with the directory levels being found subsequently to the root directory.

A problem arrives when the names space is not structured in a tree like form but, instead, has some meshes what corresponds to the more abstract and general topological form of a directed graph. Such name spaces have to be managed by some group of so-called middleware programs. A typical representative is the CORBA (Common Object Request Broker Architecture) name space. Here, a specification was provided for application in object-oriented systems in 1992 in which parts of programs, i.e., 'distributed objects', can communicate with other parts of other programs, i.e., can perform the methods defined on a particular object, independent of programming language or hardware platform and operation system. CORBA provides services for naming any particular object by aid of a path for accessing it in the system by means of the name assigned to it.

One and the same object may be reachable upon a plurality of different ways or paths as there are meshes in the name space graph. On working with the objects of the name space with computer programs even cycles may exist which could cause 'naive' programs displaying the contents of the graph or parts of it to loop forever.

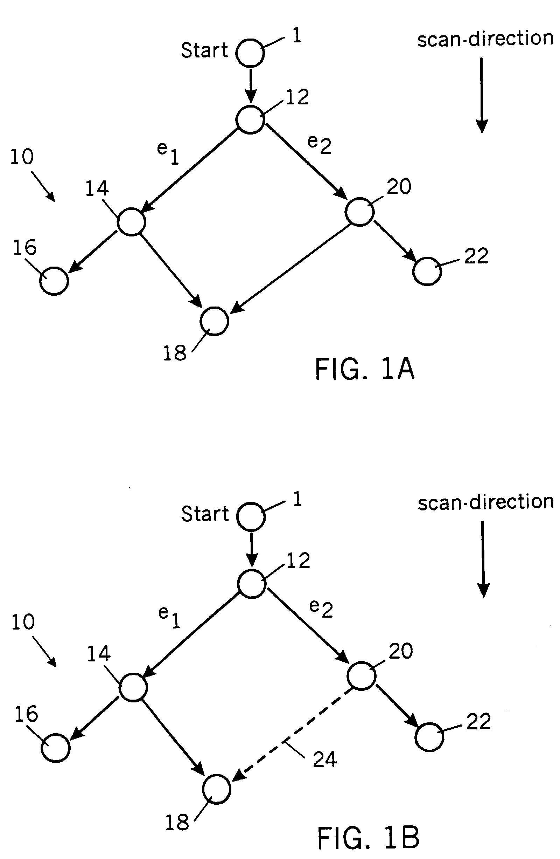

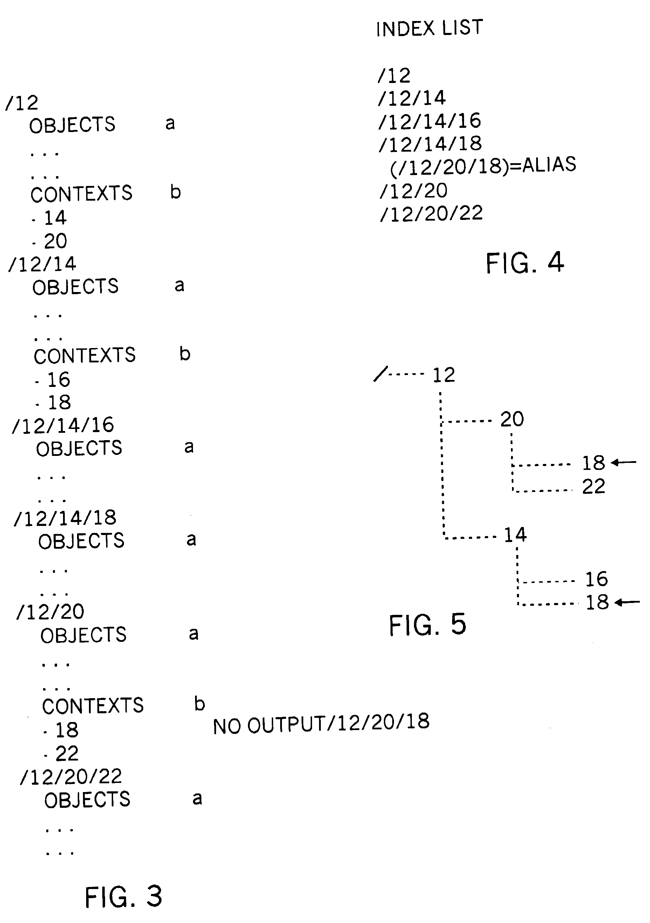

But even if any provision was undertaken to avoid endless loops the output of such a tree-view tool, as e.g. the 'Windows Explorer' would, however, be generally structured quite complicated, as some objects would be output twice or more what is depicted schematically in fig. 5 for object 18 output. Fig. 5 refers to a simplified graph structure which is in turn depicted in fig. 1 and described in more detail down below. As can be seen from the drawing such a tool does not realize when the same object can be accessed via different paths. In fig. 5 object 18 is found twice, firstly via the path /12/20/18, and secondly via the path /12/14/18.

Thus, it is very difficult for the user who controls an output tree with much more objects than it is depicted in the drawing to realize which of the plurality of objects was already been put out before and which paths belong to the same object. Thus, the user is faced to a large and possibly ambiguous name space difficult to analyze for the purpose of system administration, e.g..

### 1.3 OBJECTS OF THE INVENTION

It is thus the object of the present invention to provide a method and system for working on objects, particularly outputting them which are contained in a directed graph structure in which there is no unique way to access a particular object starting from a predefined root object without working on an object more than once.

### 2. SUMMARY AND ADVANTAGES OF THE INVENTION

Said object of the invention is achieved by the features stated in enclosed independent claims. Further advantageous arrangements and embodiments of the invention are set forth in the respective subclaims.

The basic idea comprised of the present invention is to represent the graph structure with the help of links, e.g., HTML links by aid of which the user can navigate through the output of the name space and to avoid a repeated work, e.g., display, output, etc., of the same object of a directed graph having meshes during scanning the graph by generating such a link to the location in which the object was output before instead of outputting it repeatedly. This is achieved by generating and maintaining a reference list during scanning the graph in which each object is identified uniquely and some information is stored for each object whether the object was already processed or not. In case it was already processed just a HTML-link to said prior output is generated. Otherwise the object is processed, e.g., is output and the list is updated correspondingly. By using such an HTML-link an output structure can be realized which enables the user to quickly understand the particular structure of the graph.

In particular, the user is enabled to realize when entries are accessible on a plurality of different absolute paths and is not confused by any multiple output of the same object as it is done using prior art tools.

In a preferred embodiment of the present invention bookmarks are used and HTML-links pointing to them for representing the graph structure of the name space.

An advantage of the present invention is that HTML compliant Browsers, i.e., WWW-Browser can be used for navigating through and outputting the objects of the graph.

Further, cross references and recursions are simply detected as they are representable by HTML links.

Further, navigating through the name space is more comfortable using a WWW-Browser.

Further, the output task is independent of hardware/software platform used when a HTML document is used for output.

### 3. BRIEF DESCRIPTION OF THE DRAWINGS

The present invention is next illustrated by way of example of a preferred embodiment of the inventional concept and is not limited by the shape of the figures of the accompanying drawings in which:
- Fig. 1A,B: are each a schematic representation of a graph structure being managed and output according to the present invention, B showing the special effect of the inventional concepts,
- Fig. 2A,B: is a schematic representation of the control flow and the essential steps according to the present invention,
- Fig. 3: is a schematic representation of the output generated by the method according to the present invention based on the structure depicted in fig. 1,
- Fig. 4: is a schematic representation of an index list generated after scanning the graph, and
- Fig. 5: is a schematic representation of an exemplary output generated by a prior art tree-viewer tool when confronted with the task to visualize a graph structure having meshes.

### 4. DESCRIPTION OF THE PREFERRED EMBODIMENT

With general reference to the figures and with special reference now to fig. 1 a small graph structure is given in order to be able to briefly describe the key function of the inventional concepts.

As a main application of the present invention comprises to output a CORBA name space in a optimized form the terminology of CORBA is applied. In this terminology the name space is a directed graph structure linking objects within a distributed objects framework. Nodes in the graph are represented by context objects, and each context object can contain any number of name bindings which are the links to other distributed objects which can be again context objects. For providing a better understanding of that terms the same situation expressed in terminology of computer file systems would mean that the name space is generated by a number of nodes, which are the directories. Content of each directory can be entries, i.e., names of 'files', or further directory entries. Thus, parent directories are set up which have child directories.

As a characterizing feature for graphs such topological form comprises meshes, i.e., the same child directory can have a plurality of parent directories. Thus, for the purpose of accessing an object, the convenient way to describe an object in the name space by the access route starting from the root directory via an concatenation of directory names is ambiguous. One and the same object can be treated twice or more by a prior art program as it was mentioned above already. Furthermore, such meshes can create cycles for such programs which in turn can cause endless loops in such program run.

This situation is depicted in fig. 1A in which a graph structure 10 is shown which should represent an exemplary name space intendedly held small comprising some context objects, i.e., a root context object '/', and further context objects 12, 14, 16, 18, 20, and 22. It should be noted that context object 18 is child of both, context object 14 and context object 20. Further, the name of an object is valid only inside a particular parent context, and an object can have different names in different respective parent contexts.

Now, a conventional search mechanism -depth first manner- is applied to the graph 10 for outputting the objects of it.

Thus, 12, and then via the edge e1 context object 14, then context object 16, then context object 18 is output. As e1 is completed the objects beneath e2 are taken next. Thus, context object 20 is output first.

Picking up now the essential feature of the method according to the invention context object 18 is not output twice but only a link 24 is generated pointing to the location. In particular, when processing context object 20 a HTML-link is put out pointing to where said object was already output. For more reference in that see the description of fig. 3, and fig. 4, too.

This is realized by providing in a table a unique identification code for each context object and associating with it the context object output location. By a quick reference to said table it is assured that no double output of context objects is generated. In a preferred embodiment the IOR (Interoperable Object Reference) can be taken for that purpose. It should be noted, however, that any other mechanism for identifying an object could be use instead.

Thus the picture revealing from fig. 1B results. After outputting context object 20 only a link to the bookmark is put out where context object 18 is located in the document. Context object 18 is not put out once again.

Then context object 22 is output.

Thus the following output sequence of context objects results: 12, 14, 16, 18, 20+link to context object 18 location, and 22.

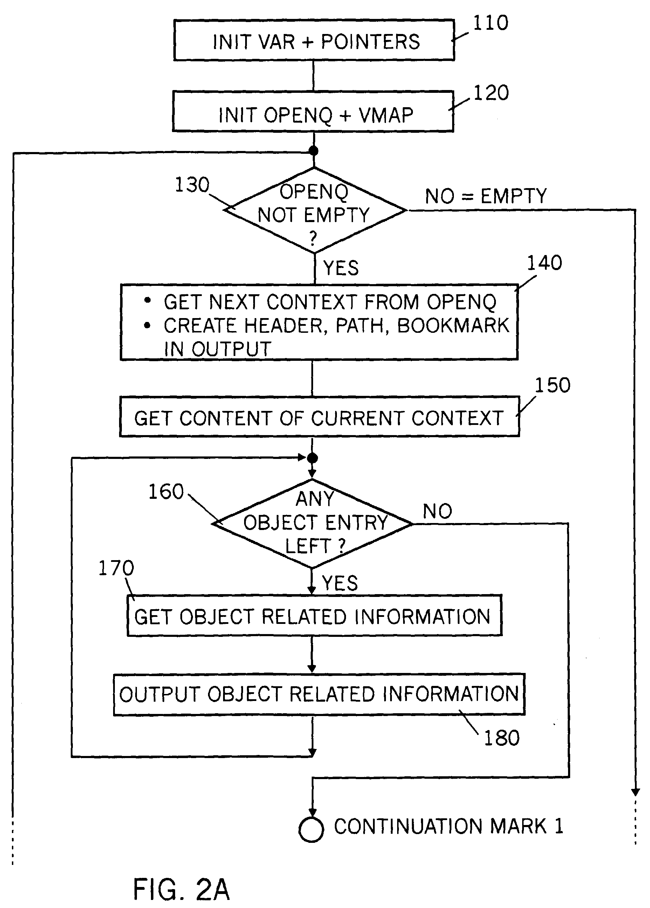

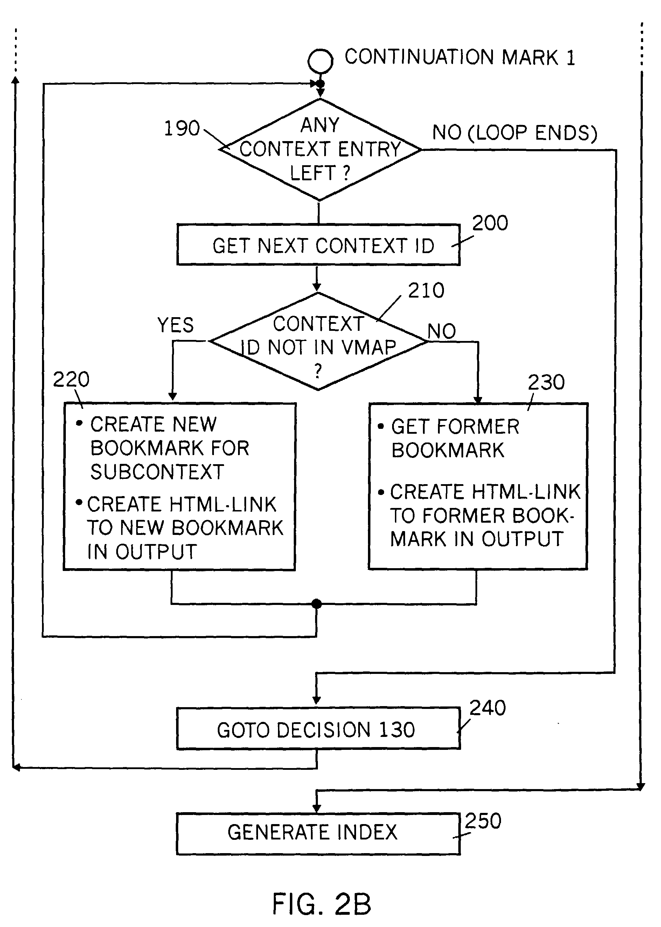

With special reference now to fig. 2 the control flow and the essential steps of the inventional method is described.

Here, two data reservoirs are used for holding context objects, firstly, the VisitedMap, i.e., the table mentioned above for all context objects to be analyzed as they will be found in the graph. Here, context objects are stored which have already been 'seen' by the algorithm. An entry in the VisitedMap holds a context ID for identifying the context (e.g., the IOR), a bookmark ID for realizing HTML bookmarks and links to it, and the path on which the object was found.

Secondly, there is the OpenQueue which holds all context objects already seen but not yet processed, i.e., not yet output when the underlying aim of the method is to output all context objects in the graph. An entry holds a pointer to a respective entry in the VisitedMap and a handle in order to perform some CORBA methods on the object. Said handle represents the interface to the CORBA system and comprises any information required to perform said method on an object via the network system holding the distributed objects.

By the way, it should be stressed that further tasks other than a pure output, like e.g., any evaluation on some information hold by the context object or its associated entries associated to it can be generated with the inventional concepts, too.

In block 110 some preliminary steps for initialization of variables for pointers, e.g., with a string comprising the absolute path name to the starting object and bookmarks, e.g., an integer counter, to be incremented on each new bookmark are performed.

In block 120 both OpenQueue and VisitedMap are initialized with the starting, or root context object. For that the starting context is added to both, VisitedMap and OpenQueue. In particular, the path string, the current bookmark counter value and the unique Context ID is stored in the VisitedMap.

The handle for the CORBA context object and a pointer to the respective entry in the VisitedMap are stored in the OpenQueue. The bookmark counter is incremented by 1.

Then, in sequence of steps 140 to 240 the whole graph is analyzed and managed in the sense of wording of the appended claims in a loop which is primarily controlled by decision 130, as long as there are objects found in the OpenQueue which still have to be processed.

Within that loop first in a block 140 the next entry is fetched from the OpenQueue using the pointer to said entry in the VisitedMap to get information about the path and the bookmark of the context. The CORBA handle is required later for acquiring information about the contents of the context from the CORBA name space. Further, a header is generated in the output which comprises the path of the current context, and a HTML bookmark, i.e., a parent bookmark, is generated at this location.

In a next block 150 the content of the context currently displayed is achieved from CORBA Services by aid of the 'context handle'. The contents can comprise entries of both, further objects and entries of (sub-)contexts.

In a first inner loop controlled on entering it with decision 160, first in step 170 all relevant information related to a concerned object is fetched. Then, in step 180 those object entries are put out including possible additional information if desired.

After completion of said first inner loop, in a subsequent inner loop controlled on entering the loop by decision 190 the (sub)context entries are processed

During said subsequent loop each next sub-context entry is fetched - block 200- by aid of the following information:
the name of the sub-context within the currently processed context,
the unique identifier (IOR),
the CORBA context handle.

If the found context is not yet listed in the VisitedMap - decision 210-it is added to VisitedMap and OpenQueue storing its unique ID (IOR), its bookmark and its path which is concatenated from the parent object path and the name of the current object valid in said parent object mentioned as context_str in the Pseudo code down below. Then, an output is generated in which 'context_str' is put out as a HTML-link to the current bookmark counter. Then said counter is incremented by one, again - block 220-.

Otherwise, -block 230- when the found context is listed in the VisitedMap a unique bookmark counter value exists for said context object. Either, the context is listed in the OpenQueue and will later be put out, or, it has already been put out and is thus not more contained in the OpenQueue.

Thus, the former bookmark counter value is fetched from the VisitedMap and a further HTML-link is generated with the text 'context_str' referring to the former bookmark, i.e., the location in the output document which the context has already been put out, or will be put out, respectively.

Said procedure continues until said subsequent inner loop completes.

Then, the control goes back to the loop entering condition 130 - see back to Fig. 3A for completing the main loop.

The complete output generated by the above described procedure is depicted in fig. 3 schematically. The arrows show the HTML-links pointing to the specific location where the contents of the context object is put out. Output blocks indicated by 'a' belong to the first inner loop controlled by decision 160, that ones indicated with 'b' stem from the subsequent inner loop controlled by decision 190 in fig. 2A, 2B, respectively.

It is obvious that the sequence in which the graph is scanned and the sequence in which the output is performed can vary. An advantage of the sequence described above could be that the output is structured for easy understanding the graphs's structure. Other purposes may imply different sequence rules.

After completion of said outer loop of scanning the graph, i.e., after having processed all objects available in the graph or a relevant portion of it - see fig. 2B again, optionally, and in coincidence with a preferred aspect of the present invention an index list is generated and put out - block 220- which lists only the absolute path names referring to each context object in the graph. The entries are thus HTML-links pointing to the location where they were already put out. Such an index list is depicted in fig. 4.

When the same context object has been found via a plurality of different paths the 'alias' paths are displayed directly below the path which was found first for said (multiple) object. By that, the graph structure can be seen quite clearly and the alias context objects having a plurality of access paths are seen as well summarized in a block which is depicted in brackets.

The basic control flow and the basic approach how to implement the inventional concept can also be retrieved from the excerpt of 'pseudocode' given below.

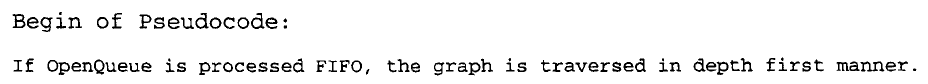

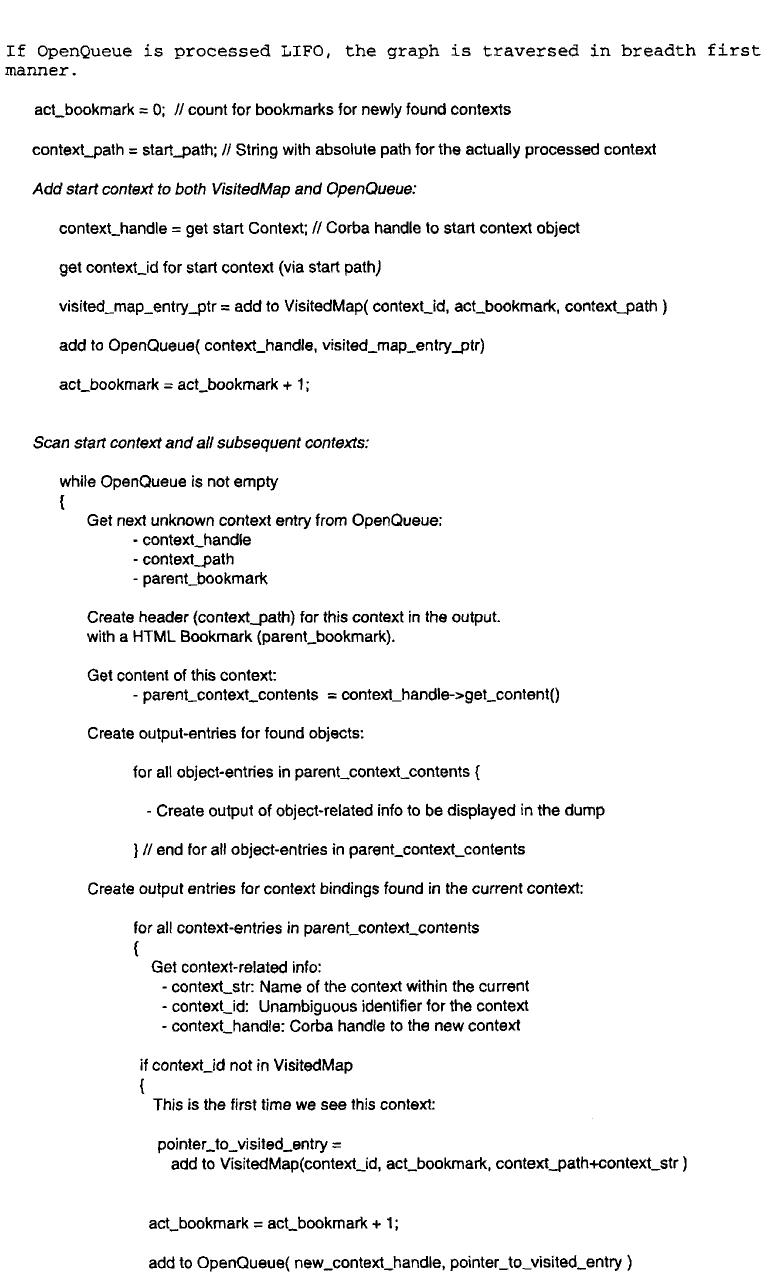

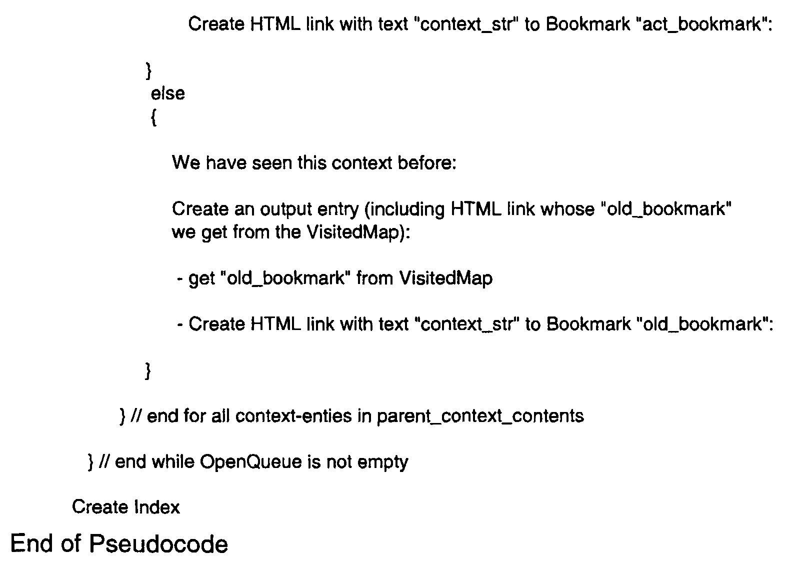

As it will be appreciated by a person skilled in the art the graph is traversed in 'depth first' manner as described above if the OpenQueue is processed first-in-first-out (FIFO). Otherwise, if the OpenQueue is processed last-in-last-out (LIFO) the graph is traversed in breadth first manner.

The inventional concepts described above can be applied broadly.

Particular the objects distributed in the network of file servers participating in the Internet can be subjected to the inventional method as well although there is a tree structure underlying. 'Hyperlinks' in said tree structured graph often occured during a web session. Such Hyperlinks are logical connections to any other object located in the graph - not necessarily and in general not being a child object of the object in which the Hyperlink was found. Thus, some 'meshes' are formed in the tree by the usage of said Hyperlinks and an 'at least logical' graph of the general form having meshes results.

Thus, one could use the method according to the invention for gaining e.g., statistical information about the way in which an Internet user uses the Internet, how many links he needs for achieving to reach a particular predetermined page, which way he takes, etc.

In the foregoing specification the invention has been described with reference to a specific exemplary embodiment thereof. It will, however, be evident that various modifications and changes may be made thereto without departing from the broader spirit and scope of the invention as set forth in the appended claims. The specification and drawings are accordingly to be regarded as illustrative rather than in a restrictive sense.

### LIST OF REFERENCE SIGNS

- 10: graph
- 12 to 22: nodes, context objects
- 24: link
- 110 to 250: blocks/steps of inventional method

## Claims

1. A method for managing name spaces being formed of a directed graph structure having meshes and objects, said objects being associated to nodes of said graph and being linked to other objects via a distributed objects framework,
the method comprising the task of scanning (110-240)at least a portion of said name space for working on objects comprised of said portion,
the method being characterized by comprising the steps of
identifying each object (200) with a unique identification code,
storing (110,120,140,220,230) the location information being associated with the result of said work on said objects already being worked on,
generating (220,230) a link to said location instead of a repeated work on said object when the same object is found a further time during scanning the name space.

2. The method according to claim 1, in which the work on said objects comprises outputting them or outputting contents of said objects.

3. The method according to the preceding claim in which the objects being represented by CORBA context objects comprising a number of name bindings being in turn links to other distributed objects.

4. The method according to the preceding claim in which said link to said location is a HTML-link to a bookmark uniquely associated to a respective object.

5. The method according to the preceding claim, comprising further the steps of
generating a reference table comprising entries each comprising said unique object identification code and a means for locating an output location possibly generated already before,
performing (220,230) a quick reference to said table for checking if an object was already put out.

6. Tool for improved managing of name spaces having means for performing the method according to one of the preceding claims 1 to 5.

7. Use of the method according to one of the preceding claims 1 to 5 for tracing actions performed by a user during a session of said user contacting the network holding said distributed objects.

8. Use of a WWW-Browser for navigating or visualizing a graph structured name space.
